# EUROPEAN PATENT SPECIFICATION

(11) **EP 4 321 394 B1**
(45) Date of publication and mention of the grant of the patent: **24.09.2025**
(21) Application number: 23189845.3
(22) Date of filing: 04.08.2023
(51) Int. Cl.: B60R 22/28, B64D 11/06

(54) **ROTARY LAP BELT SHACKLE ASSEMBLY**
ROTIERENDE SCHÜLLEBANDANORDNUNG
ENSEMBLE MANILLE DE CEINTURE SOUS-ABDOMINALE ROTATIVE

(30) Priority: 04.08.2022 IN 202241044597; 18.05.2023 US 202318199179
(43) Date of publication of application: 14.02.2024
(73) Proprietor: B/E Aerospace, Inc., Winston-Salem, NC 27105 (US)
(72) Inventor: RAO, Sreekanth, 560061 Bangalore (IN); ACHARYA, Pradeep, 560072 Bangalore (IN); DOWTY, Mark B., Rural Hall, 27045 (US); DEMPAH, Maxime, Atlanta (US)
(74) Representative: Dehns

(56) References cited:
- DE-A1- 10 032 572

## Description

### CROSS-REFERENCE TO RELATED APPLICATION

This application claims the benefit of priority of Indian Patent Application Number 202241044597 filed August 4, 2022 for "ROTARY LAP BELT SHACKLE ASSEMBLY," and US application 18/199179.

### TECHNICAL FIELD AND BACKGROUND

The present disclosure relates generally to lap belt energy absorbers, and more particularly to a rotary lap belt shackle assembly configured to limit inertial loads on seat structures. The closest prior art document DE10032572A1 discloses a lap belt shackle assembly, comprising a component, a deformable link attached at an end to the component; wherein the deformation link is configured to undergo plastic deformation.

Lap belts are designed to prevent serious injury during a sudden deceleration event. Basic lap belts attach to seat structures using rigid links. In the event of a sudden deceleration, for instance a crash, inertial loads on the seat occupant are transferred through the rigid link to the seat structure early in the deceleration. To avoid component failure, seat structures must be capable of withstanding high impact loads, and therefore must be substantial and reinforced. To alleviate the performance requirements of seat structures, complex lap belt inertia reels can be used which include internal energy absorbers. While effective at attenuating inertial loads, to a degree, specialized inertia reels add complexity and cost to the seat and are prone to failure.

Therefore, what is needed is a lap belt energy absorber that broadly enhances occupant safety, and which obviates the need for complex inertia reels and provides an opportunity to further optimize seat components.

### BRIEF SUMMARY

Broadly speaking, the present disclosure is directed to embodiments of rotating seat belt shackles. Shackle rotation is limited by a deformable link that acts in conjunction with a deformable lattice structure. At lower inertial loads from lower accelerations (e.g., 9g) the rotary lap belt shackle acts as a rigid link. Once the inertial load reaches an equivalent force value at greater accelerations (e.g., 14g limit load) the rotary lap belt shackle begins its stroke within a guided path and absorbing energy by straightening a deformable link and crushing a lattice structure. The rotary motion equipped with a predictable failure mechanism helps in attenuating impact energy with minimum occupant displacement. Minimum occupant displacement may mean lesser head path potentially resulting in lower head impact criteria (HIC) values.

Benefits of the rotary seat belt shackle embodiments disclosed herein include, but are not limited to, limiting the inertial loads that the occupant applies to the seat structure in a crash thereby preventing ultimate failure of seat structures, the ability to achieve weight reduction in seat frames, and improvements to occupant safety through a reduction of the occupant lap belt load.

To achieve the foregoing and other advantages, in a first aspect the present disclosure provides a lap belt shackle assembly including a seat component defining a guideway such as an arcuate guideway, a shackle pivotally attached at one end to the seat component and attachable at an opposing end to a lap belt component, a deformable link attached at one end to the shackle and at an opposing end to the seat component, a guide attached to at least one of the deformable link and the shackle, the guide configured to travel along the guideway, and an energy attenuator positioned in the guideway. In use, when a predetermined threshold inertial load is met, each of the deformation link and the energy attenuator is configured to undergo plastic deformation as the guide travels along the guideway.

In some embodiments, the energy attenuator is configured to undergo plastic deformation when a predetermined threshold inertial load is met to permit initial movement of the guide along the arcuate guideway, and the deformable link is configured to undergo plastic deformation during continued movement of the guide along the guideway.

In some embodiments, the deformable link is configured to undergo plastic deformation when a predetermined threshold inertial load is met to permit initial movement of the guide along the arcuate guideway, and the energy attenuator is configured to undergo plastic deformation during continued movement of the guide along the guideway.

In some embodiments, the deformable link is a unitary structure including a first portion and a second portion at an angle to the first portion, wherein the angle between the first and second portions is configured to increase (i.e., the link "straightens") as the guide moves along the guideway.

In some embodiments, the energy absorber is an additively manufactured lattice structure.

In some embodiments, the lattice structure comprises a variable density.

In some embodiments, the shackle comprises a linear portion formed between the one end and the opposing end and a lateral projection positioned along one side of the linear portion substantially centered between the one end and the opposing end, and wherein the guide is received through an opening formed in the lateral projection.

In some embodiments, the seat component is a spreader, the shackle is positioned on an outboard side of the spreader, and the deformable link is positioned outboard of the shackle.

In a further aspect the present disclosure provides an aircraft passenger seat assembly including a spreader attachable to a backrest and at least one transverse beam tube, and a lap belt shackle assembly attached to the spreader. The shackle assembly generally includes a shackle pivotally attached at one end to the spreader and attachable at an opposing end to a lap belt component, a deformable link attached at one end to the shackle and at an opposing end to the spreader, a guide attached to at least one of the deformable link and the shackle, the guide configured to travel along an arcuate guideway formed in the spreader, and an energy attenuator positioned in the arcuate guideway. In use, the shackle assembly acts as a rigid links below a predetermined threshold inertial load value and undergoes plastic deformation (i.e., the deformable link and energy attenuator deform) to attenuate impact energy when the predetermined threshold inertial load value is met.

In some embodiments, in use, the energy attenuator is configured to undergo plastic deformation when a predetermined threshold inertial load is met to permit initial movement of the guide along the arcuate guideway, and the deformable link is configured to undergo plastic deformation during continued movement of the guide along the guideway.

In some embodiments, the deformable link is configured to undergo plastic deformation when a predetermined threshold inertial load is met to permit initial movement of the guide along the arcuate guideway, and the energy attenuator is configured to undergo plastic deformation during continued movement of the guide along the guideway.

In some embodiments, the deformable link and the energy attenuator act in conjunction to attenuate impact force on the spreader.

Embodiments of the inventive concepts may include one or more or any combination of the above aspects, features and configurations.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated, and some features may be omitted or may be represented schematically in the interest of clarity. Like reference numbers in the drawings may represent and refer to the same or similar element, feature, or function. In the drawings:
FIG. 1A illustrates a spreader equipped with a rotary lap belt energy attenuator according to an embodiment of the present disclosure;
FIG. 1B is a detailed view of FIG. 1A illustrating the rotary lap belt energy attenuator;
FIG. 2 illustrates rotary motion of the rotary lap belt energy attenuator;
FIG. 3 illustrates a rotary lap belt energy attenuator according to a further embodiment of the present disclosure;
FIG. 4 illustrates a crushed condition of a column structure for use in the rotary lap belt energy attenuator according to the present disclosure;
FIG. 5A illustrates an additively manufactured lattice structure for use in the rotary lap belt energy attenuator and shown in an intact condition;
FIG. 5B illustrates the additively manufactured lattice structure of FIG. 5B in a crushed condition; and
FIG. 6 illustrates rotary lap belt energy attenuator compliance with TSO-C127c.

### DETAILED DESCRIPTION

The description set forth below in connection with the appended drawings is intended to be a description of various, illustrative embodiments of the disclosed subject matter. Specific features and functionalities are described in connection with each illustrative embodiment; however, it will be apparent to those skilled in the art that the disclosed embodiments may be practiced without each of those specific features and functionalities. The aspects, features and functions described below in connection with one embodiment are intended to be applicable to the other embodiments described below except where expressly stated or where an aspect, feature or function is incompatible with an embodiment.

Broadly speaking, the present disclosure provides embodiments of lap belt shackle assemblies including energy absorbing features. In use, the shackle attaches the lap belt to the seat frame, for instance at an anchor point on a seat spreader. In the absence of impact force of a sufficient threshold value, the shackle acts as a rigid link resisting rotary motion. During impact of a magnitude sufficient to meet a threshold, the shackle undergoes rotary motion to allow a minimal amount of displacement sufficient to attenuate force on the shackle and consequently the connected seat frame. As the shackle rotates, each of a deformable link and an energy attenuator deform to control and slow the rotary motion. As discussed further below, the deformable link and the energy attenuator may work in conjunction or one may function to "unlock" initial rotary motion and thereafter both function to absorb impact energy.

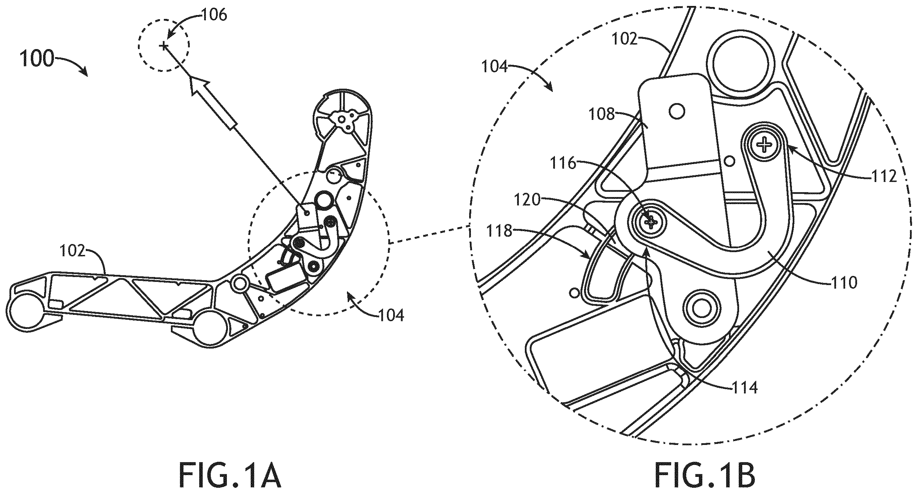

FIGS. 1A and 1B illustrates a seat frame assembly 100 according to an embodiment of the present disclosure. The seat frame assembly 100 includes a seat frame element, as shown implemented as a spreader 102, which is a rigid member attachable to transverse beam tubes (e.g., forward and aft transverse beam tubes) and a backrest. In some seat frame platforms, the backrest is pivotably attached to the spreader to permit a degree of backrest recline. In some embodiments, the pivotal attachment end may further attach a pivoting armrest. The seat spreader may be made from metal, composite material or combinations thereof, and in some embodiments is foraminous to save weight. The spreader may further attach legs or legs may attached to the transverse beam tubes.

An energy attenuating lap belt shackle assembly 104, referred to herein as the "shackle" or "shackle assembly," is positioned relative to the spreader at a typical location for lap belt attachment according to the occupant's center of gravity 106. Although not shown, a lap belt typically anchors to spreaders on opposite sides of the seat. Separate parts of the belt attach using a buckle and tongue arrangement. Lap belts are typically size adjustable to accommodate different sized passengers. The shackle assembly 104 includes a shackle 108 pivotally attached at one end to the spreader and attachable at the opposing end to a component of the lap belt. As shown, the shackle 108 has an elongated shape including a linear portion formed between the two opposing ends. A lateral feature extends from one side substantially centered between the two opposing ends. In some embodiments, the shackle 108 is rigid and made of metal. In use, the shackle 108 remains substantially stationary at lower inertial load values from lesser accelerations (e.g., below 14g), and undergoes rotary motion when a predetermined inertial threshold load value is met or exceeded from greater accelerations (e.g., 14g).

The shackle assembly 104 further includes a deformable link 110 having a first end 112 attached directly to the spreader 102 and a second end 114 attached to the shackle 108. In some embodiments, the second end 114 is attached to the shackle 108 using a guide 116, such as a pin, bolt or the like, configured to travel or stroke along an arcuate guideway 118 formed in the spreader 102 as discussed further below. In some embodiments, the second end 114 of the deformable link 110 is attached to the lateral feature formed on the shackle 108. In some embodiments, the deformable link 110 is shaped to include a first portion terminating in the first end 112 and a second portion terminating in the second end and angled relative to the first portion. In use, when the shackle 108 rotates, the angle formed between the first and second portions increases, thus causing the link to "open" or "straighten" the link. In some embodiments, the deformable link 110 is a unitary structure made from metal. Threaded screws, bolts and other fastener types and fastening means may be used to attach the deformable link 110 to the assembly.

The shackle assembly 104 further includes an energy attenuator 120 positioned in the guideway 118, for instance an arcuate guideway. In some embodiments, the energy attenuator 120 is implemented as a collapsible lattice structure, which may be made by an additive manufacturing process. In some embodiments, the lattice structure 120 is arcuate shaped to correspond to the arcuate guideway 118 and substantially "fills" the guideway. The lattice structure 120 may be attached to or detached from the spreader 102. The lattice structure 120 acts in compression to absorb compressive force on the lattice structure from the rotating shackle 108 and attached traveling guide 116 by way of contact with the traveling guide.

In some embodiments, the lattice structure is a variable density lattice structure customizable to absorb impact energy according to, for example, the anticipated average weight of a seat occupant considering the construction of the seat components such as the inboard spreader, outboard spreader, and seat leg. For example, a less porous (i.e., denser) lattice structure may be used to support stiffer seat, whereas a more porous (i.e., less dense) lattice structure may be used to support a less stiff seat. In use, the lattice structure undergoes a structural change when a predetermined threshold load value is met.

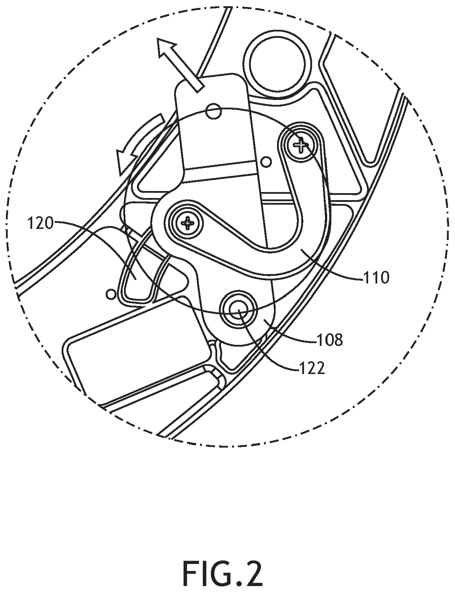

FIG. 2 illustrates center of gravity loading and rotary motion of the shackle 108. As shown, the shackle 108 is positioned in its initial or original position corresponding to standard use in the absence of a threshold meeting load value. When activated, the shackle 108 rotates about the attachment pivot 122 thereby deforming the deformable link and compressing the lattice structure. The deformations may occur in conjunction or sequentially. For example, in some embodiments, lattice structure deformation may occur to release initial rotary motion of the shackle while both features deform during continued rotary motion of the shackle, or vice versa.

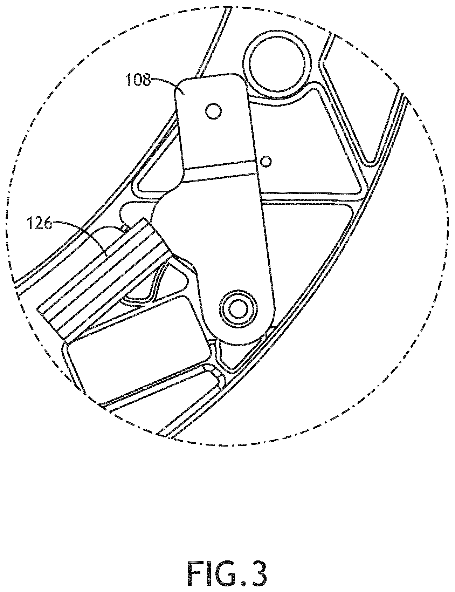

FIG. 3 illustrates the deformable link 110 implemented as a crushable column structure 124 disposed outside of the arcuate guideway and with one column end in direct contact with the shackle 108, for instance the lateral feature formed on the shackle. In use, rotary motion of the shackle causes the column structure 126 to crush utilizing buckling and successive crushing for energy absorption.

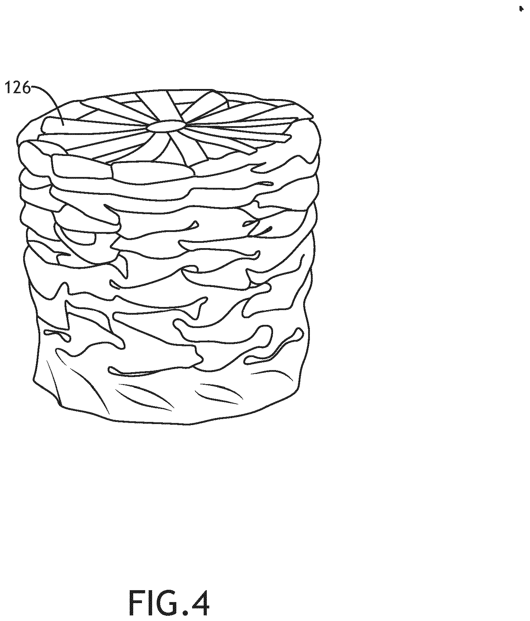

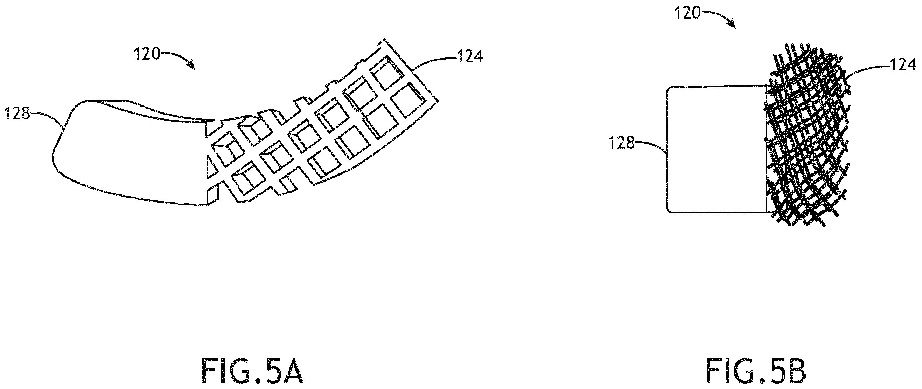

FIG. 4 illustrates a non-limiting example of the crushable column structure 126 in a crushed condition. The column structure 126 may be made by an additive manufacturing process or by another process. FIGS. 5A and 5B illustrate an additively manufactured energy attenuator including an integrally formed solid portion 128 and the lattice structure 124 extending from one end of the solid portion. The lattice structure 124 is configured to crush utilizing buckling and successive crushing for energy absorption. Like the column structure 126, the lattice structure 124 including its solid end may be made by an additive manufacturing process or by another process, and may have a variable density.

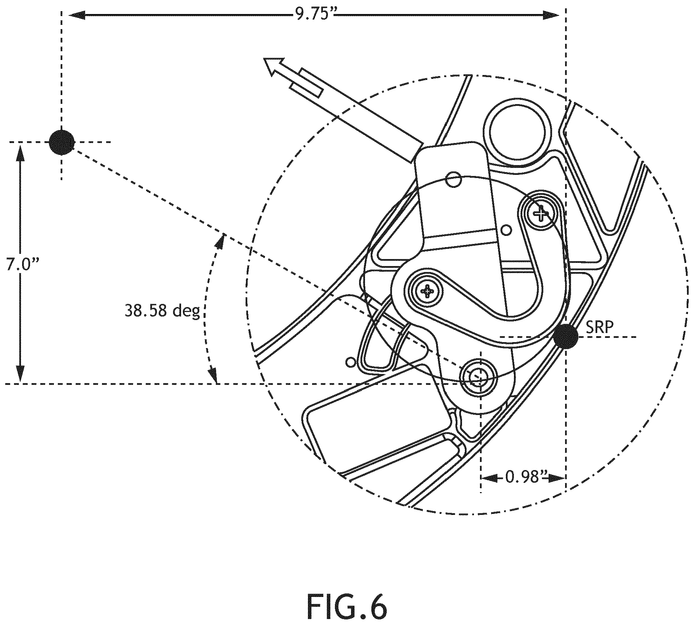

FIG. 6 illustrates exemplary compliance of the shackle location for the rotary lap belt energy attenuator with Federal Aviation Regulation (FAA) Technical Standard Order (TSO) C127c. Pursuant to TSO-C127c, the pelvic restraint system must be designed such that the vertical angle between the pelvic restraint centerline and the seat reference point (SRP) water line must range from 35 Deg to 55 Deg. FIG. 6 illustrates on example of the SRP water line passing through the SRP parallel to the floor, and the pelvic restraint centerline formed by a line from the pelvic restraint anchorage to a point located approx. 9.75 in (250 mm) forward of the SRP and approx. 7.0 in (180 mm) above the SRP water line. In addition, the pelvic restraint anchorage point is shown located approx. 0.98 in (~25 mm) forward of the SRP, which is less than the maximum allowable distance of 2.0 in (50 mm). FIG. 6 further shows continued compliance with TSO-C127c after deformation and travel of the shackle to the farthest extent of the guideway.

## Claims

1. A lap belt shackle assembly, comprising:
a seat component (102) defining a guideway (118);
a shackle (108) pivotally attached at one end to the seat component and attachable at an opposing end to a lap belt component;
a deformable link (110) attached at one end to the shackle and at an opposing end to the seat component;
a guide (116) attached to at least one of the deformable link and the shackle, the guide configured to travel along the guideway; and
an energy attenuator (120) positioned in the guideway;
wherein at least one of the deformable link and the energy attenuator is configured to undergo plastic deformation as the guide travels along the guideway.

2. The lap belt shackle according to claim 1, wherein the energy attenuator (120) is configured to undergo plastic deformation when a predetermined threshold inertial load is met to permit initial movement of the guide along the guideway, and the deformable link (110) is configured to undergo plastic deformation during continued movement of the guide along the guideway.

3. The lap belt shackle according to claim 1, wherein the deformable link (110) is configured to undergo plastic deformation when a predetermined threshold inertial load is met to permit initial movement of the guide along the guideway, and the energy attenuator is configured to undergo plastic deformation during continued movement of the guide along the guideway.

4. The lap belt shackle assembly according to claim 1, wherein the deformable link is a unitary structure including a first portion and a second portion at an angle to the first portion, wherein the angle between the first and second portions is configured to increase as the guide travels along the guideway.

5. The lap belt shackle assembly according to any preceding claim, wherein the energy absorber (120) is an additively manufactured lattice structure.

6. The lap belt shackle assembly according to claim 5, wherein the lattice structure comprises a variable density.

7. The lap belt shackle assembly according to any preceding claim, wherein the shackle (108) comprises a linear portion formed between the one end and the opposing end and a lateral projection positioned along one side of the linear portion substantially centered between the one end and the opposing end, and wherein the guide is received through an opening formed in the lateral projection.

8. The lap belt shackle assembly according to any preceding claim, wherein the seat component is a spreader (102), the shackle (108) is positioned on an outboard side of the spreader, and the deformable link is positioned outboard of the shackle.

9. An aircraft passenger seat assembly, comprising:
a spreader (102) attachable to a backrest and at least one transverse beam tube; and
a lap belt shackle assembly (104) attached to the spreader, comprising:
a shackle (108) pivotally attached at one end to the spreader and attachable at an opposing end to a lap belt component;
a deformable link (110) attached at one end to the shackle and at an opposing end to the spreader;
a guide (116) attached to at least one of the deformable link and the shackle, the guide configured to travel along a guideway (118) formed in the spreader; and
an energy attenuator (120) positioned in the guideway;
wherein at least one of the deformable link and the energy attenuator is configured to undergo plastic deformation as the guide travels along the guideway.

10. The aircraft passenger seat assembly according to claim 9, wherein the energy attenuator (120) is configured to undergo plastic deformation when a predetermined threshold inertial load is met to permit initial movement of the guide along the guideway, and the deformable link is configured to undergo plastic deformation during continued movement of the guide along the guideway.

11. The aircraft passenger seat assembly according to claim 9, wherein the deformable link (110) is configured to undergo plastic deformation when a predetermined threshold inertial load is met to permit initial movement of the guide along the guideway, and the energy attenuator is configured to undergo plastic deformation during continued movement of the guide along the guideway.

12. The aircraft passenger seat assembly according to claim 9, wherein the deformable link (110) is a unitary structure including a first portion and a second portion at an angle to the first portion, wherein the angle between the first and second portions is configured to increase as the guide travels along the guideway.

13. The aircraft passenger seat assembly according to claim 9, wherein the energy absorber (120) is an additively manufactured lattice structure.

14. The aircraft passenger seat assembly according to claim 13, wherein the lattice structure comprises a variable density.

15. The aircraft passenger seat assembly according to any of claims 9 to 14, wherein the shackle (108) comprises a linear portion formed between the one end and the opposing end and a lateral projection positioned along one side of the linear portion substantially centered between the one end and the opposing end, and wherein the guide is received through an opening formed in the lateral projection.

## Patentansprüche

1. Beckengurtbügelanordnung, umfassend:
eine Sitzkomponente (102), eine Führungsbahn (118) definierend;
einen Bügel (108), der drehbar an einem Ende an der Sitzkomponente angebracht ist und an einem gegenüberliegenden Ende an einer Beckengurtkomponente anbringbar ist;
eine verformbare Verbindung (110), die an einem Ende an dem Bügel und an einem gegenüberliegenden Ende an der Sitzkomponente angebracht ist;
eine Führung (116), die mindestens an der verformbaren Verbindung und/oder dem Bügel angebracht ist, wobei die Führung ausgelegt ist, um entlang der Führungsbahn zu verfahren; und
einen in der Führungsbahn positionierten Energiedämpfer (120); wobei mindestens die verformbare Verbindung und/oder der Energiedämpfer ausgelegt ist, um einer plastischen Verformung unterzogen zu werden, wenn die Führung entlang der Führungsbahn verfährt.

2. Beckengurtbügel nach Anspruch 1, wobei der Energiedämpfer (120) ausgelegt ist, um einer plastischen Verformung unterzogen zu werden, wenn eine vorbestimmte Schwellenträgheitslast erreicht wird, um eine anfängliche Bewegung der Führung entlang der Führungsbahn zuzulassen, und wobei die verformbare Verbindung (110) ausgelegt ist, um während der fortgesetzten Bewegung der Führung entlang der Führungsbahn einer plastischen Verformung unterzogen zu werden.

3. Beckengurtbügel nach Anspruch 1, wobei die verformbare Verbindung (110) ausgelegt ist, um einer plastischen Verformung unterzogen zu werden, wenn eine vorbestimmte Schwellenträgheitslast erreicht wird, um eine anfängliche Bewegung der Führung entlang der Führungsbahn zuzulassen, und der Energiedämpfer ausgelegt ist, um während der fortgesetzten Bewegung der Führung entlang der Führungsbahn einer plastischen Verformung unterzogen zu werden.

4. Beckengurtbügelanordnung nach Anspruch 1, wobei die verformbare Verbindung eine einheitliche Struktur ist, einschließlich eines ersten Abschnitts und eines zweiten Abschnitts in einem Winkel zum ersten Abschnitt, wobei der Winkel zwischen dem ersten und dem zweiten Abschnitt ausgelegt ist, um zuzunehmen, wenn die Führung entlang der Führungsbahn verfährt.

5. Beckengurtbügelanordnung nach einem der vorhergehenden Ansprüche, wobei der Energiedämpfer (120) eine zusätzlich hergestellte Gitterstruktur ist.

6. Beckengurtbügelanordnung nach Anspruch 5, wobei die Gitterstruktur eine variable Dichte umfasst.

7. Beckengurtbügelanordnung nach einem der vorhergehenden Ansprüche, wobei der Bügel (108) einen linearen Abschnitt umfasst, der zwischen dem einen Ende und dem gegenüberliegenden Ende ausgebildet ist, und einen seitlichen Vorsprung, der entlang einer Seite des linearen Abschnitts im Wesentlichen mittig zwischen dem einen Ende und dem gegenüberliegenden Ende positioniert ist, und wobei die Führung durch eine in dem seitlichen Vorsprung ausgebildete Öffnung aufgenommen wird.

8. Beckengurtbügelanordnung nach einem der vorhergehenden Ansprüche, wobei die Sitzkomponente ein Spreizer (102) ist, der Bügel (108) auf einer Außenseite des Spreizers positioniert ist und die verformbare Verbindung außerhalb des Bügels positioniert ist.

9. Flugzeugpassagiersitzanordnung, umfassend:
einen Spreizer (102), der an einer Rückenlehne und an mindestens einem Querträgerrohr anbringbar ist; und
eine Beckengurtbügelanordnung (104), die an dem Spreizer angebracht ist, umfassend:
einen Bügel (108), der drehbar an einem Ende an dem Spreizer angebracht ist und an einem gegenüberliegenden Ende an einer Beckengurtkomponente anbringbar ist;
eine verformbare Verbindung (110), die an einem Ende an dem Bügel und an einem gegenüberliegenden Ende an dem Spreizer angebracht ist;
eine Führung (116), die mindestens an der verformbaren Verbindung und/oder dem Bügel angebracht ist, wobei die Führung ausgelegt ist, um entlang einer in dem Spreizer ausgebildeten Führungsbahn (118) zu verfahren; und
einen in der Führungsbahn positionierten Energiedämpfer (120);
wobei mindestens die verformbare Verbindung und/oder der Energiedämpfer ausgelegt ist, um einer plastischen Verformung unterzogen zu werden, wenn die Führung entlang der Führungsbahn verfährt.

10. Flugzeugpassagiersitzanordnung nach Anspruch 9, wobei der Energiedämpfer (120) ausgelegt ist, um einer plastischen Verformung unterzogen zu werden, wenn eine vorbestimmte Schwellenträgheitslast erreicht wird, um eine anfängliche Bewegung der Führung entlang der Führungsbahn zuzulassen, und die verformbare Verbindung ausgelegt ist, um während der fortgesetzten Bewegung der Führung entlang der Führungsbahn einer plastischen Verformung unterzogen zu werden.

11. Flugzeugpassagiersitzanordnung nach Anspruch 9, wobei die verformbare Verbindung (110) ausgelegt ist, um einer plastischen Verformung unterzogen zu werden, wenn eine vorbestimmte Schwellenträgheitslast erreicht wird, um eine anfängliche Bewegung der Führung entlang der Führungsbahn zuzulassen, und der Energiedämpfer ausgelegt ist, um während der fortgesetzten Bewegung der Führung entlang der Führungsbahn einer plastischen Verformung unterzogen zu werden.

12. Flugzeugpassagiersitzanordnung nach Anspruch 9, wobei die verformbare Verbindung (110) eine einheitliche Struktur ist, einschließlich eines ersten Abschnitts und eines zweiten Abschnitts in einem Winkel zum ersten Abschnitt, wobei der Winkel zwischen dem ersten und dem zweiten Abschnitt ausgelegt ist, um zuzunehmen, wenn die Führung entlang der Führungsbahn verfährt.

13. Flugzeugpassagiersitzanordnung nach Anspruch 9, wobei der Energiedämpfer (120) eine zusätzlich gefertigte Gitterstruktur ist.

14. Flugzeugpassagiersitzanordnung nach Anspruch 13, wobei die Gitterstruktur eine variable Dichte umfasst.

15. Flugzeugpassagiersitzanordnung nach einem der Ansprüche 9 bis 14, wobei der Bügel (108) einen linearen Abschnitt umfasst, der zwischen dem einen Ende und dem gegenüberliegenden Ende ausgebildet ist, und einen seitlichen Vorsprung, der entlang einer Seite des linearen Abschnitts im Wesentlichen mittig zwischen dem einen Ende und dem gegenüberliegenden Ende positioniert ist, und wobei die Führung durch eine in dem seitlichen Vorsprung ausgebildete Öffnung aufgenommen wird.

## Revendications

1. Ensemble manille de ceinture sous-abdominale, comprenant :
un composant de siège (102) définissant une coulisse (118) ;
une manille (108) fixée de manière pivotante au niveau d'une extrémité au composant de siège et pouvant être fixée au niveau d'une extrémité opposée à un composant de ceinture sous-abdominale ;
un maillon déformable (110) fixé au niveau d'une extrémité à la manille et au niveau d'une extrémité opposée au composant de siège ;
un guide (116) fixé à au moins l'un du maillon déformable et de la manille, le guide étant conçu pour se déplacer le long de la coulisse ; et
un atténuateur d'énergie (120) positionné dans la coulisse ;
dans lequel au moins l'un du maillon déformable et de l'atténuateur d'énergie est conçu pour subir une déformation plastique lorsque le guide se déplace le long de la coulisse.

2. Manille de ceinture sous-abdominale selon la revendication 1, dans laquelle l'atténuateur d'énergie (120) est conçu pour subir une déformation plastique lorsqu'une charge inertielle seuil prédéterminée est atteinte afin de permettre un déplacement initial du guide le long de la coulisse, et le maillon déformable (110) est conçu pour subir une déformation plastique pendant un déplacement continu du guide le long de la coulisse.

3. Manille de ceinture sous-abdominale selon la revendication 1, dans laquelle le maillon déformable (110) est conçu pour subir une déformation plastique lorsqu'une charge inertielle seuil prédéterminée est atteinte afin de permettre un déplacement initial du guide le long de la coulisse, et l'atténuateur d'énergie est conçu pour subir une déformation plastique pendant un déplacement continu du guide le long de la coulisse.

4. Ensemble manille de ceinture sous-abdominale selon la revendication 1, dans lequel le maillon déformable est une structure unitaire comportant une première partie et une seconde partie à un angle par rapport à la première partie, dans lequel l'angle entre les première et seconde parties est conçu pour augmenter à mesure que le guide se déplace le long de la coulisse.

5. Ensemble manille de ceinture sous-abdominale selon une quelconque revendication précédente, dans lequel l'absorbeur d'énergie (120) est une structure en treillis fabriquée de manière additive.

6. Ensemble manille de ceinture sous-abdominale selon la revendication 5, dans lequel la structure en treillis comprend une densité variable.

7. Ensemble manille de ceinture sous-abdominale selon une quelconque revendication précédente, dans lequel la manille (108) comprend une partie linéaire formée entre l'extrémité et l'extrémité opposée et une saillie latérale positionnée le long d'un côté de la partie linéaire sensiblement centrée entre l'extrémité et l'extrémité opposée, et dans lequel le guide est reçu à travers une ouverture formée dans la saillie latérale.

8. Ensemble manille de ceinture sous-abdominale selon une quelconque revendication précédente, dans lequel le composant de siège est un écarteur (102), la manille (108) est positionnée sur un côté extérieur de l'écarteur, et le maillon déformable est positionné à l'extérieur de la manille.

9. Ensemble siège passager d'aéronef, comprenant :
un écarteur (102) pouvant être fixé à un dossier et à au moins un tube de poutre transversale ; et
un ensemble manille de ceinture sous-abdominale (104) fixé à l'écarteur, comprenant :
une manille (108) fixée de manière pivotante au niveau d'une extrémité à l'écarteur et pouvant être fixée au niveau d'une extrémité opposée à un composant de ceinture sous-abdominale ;
un maillon déformable (110) fixé au niveau d'une extrémité à la manille et au niveau d'une extrémité opposée à l'écarteur ;
un guide (116) fixé à au moins l'un du maillon déformable et de la manille, le guide étant conçu pour se déplacer le long d'une coulisse (118) formée dans l'écarteur ; et
un atténuateur d'énergie (120) positionné dans la coulisse ;
dans lequel au moins l'un du maillon déformable et de l'atténuateur d'énergie est conçu pour subir une déformation plastique lorsque le guide se déplace le long de la coulisse.

10. Ensemble siège passager d'aéronef selon la revendication 9, dans lequel l'atténuateur d'énergie (120) est conçu pour subir une déformation plastique lorsqu'une charge inertielle seuil prédéterminée est atteinte afin de permettre un déplacement initial du guide le long de la coulisse, et le maillon déformable est conçu pour subir une déformation plastique pendant un déplacement continu du guide le long de la coulisse.

11. Ensemble siège passager d'aéronef selon la revendication 9, dans lequel le maillon déformable (110) est conçu pour subir une déformation plastique lorsqu'une charge inertielle seuil prédéterminée est atteinte afin de permettre un déplacement initial du guide le long de la coulisse, et l'atténuateur d'énergie est conçu pour subir une déformation plastique pendant un déplacement continu du guide le long de la coulisse.

12. Ensemble siège passager d'aéronef selon la revendication 9, dans lequel le maillon déformable (110) est une structure unitaire comportant une première partie et une seconde partie à un angle par rapport à la première partie, dans lequel l'angle entre les première et seconde parties est conçu pour augmenter à mesure que le guide se déplace le long de la coulisse.

13. Ensemble siège passager d'aéronef selon la revendication 9, dans lequel l'absorbeur d'énergie (120) est une structure en treillis fabriquée de manière additive.

14. Ensemble siège passager d'aéronef selon la revendication 13, dans lequel la structure en treillis comprend une densité variable.

15. Ensemble siège passager d'aéronef selon l'une quelconque des revendications 9 à 14, dans lequel la manille (108) comprend une partie linéaire formée entre l'extrémité et l'extrémité opposée et une saillie latérale positionnée le long d'un côté de la partie linéaire sensiblement centrée entre l'extrémité et l'extrémité opposée, et dans lequel le guide est reçu à travers une ouverture formée dans la saillie latérale.
